# EUROPEAN PATENT APPLICATION

(11) **EP 2 639 770 A2**
(43) Date of publication of application: **18.09.2013**
(21) Application number: 13159507.6
(22) Date of filing: 15.03.2013
(51) Int. Cl.: G06T 11/60

(54) **Graphic processing apparatus for updating graphic editing screen and method thereof**

(30) Priority: 15.03.2012 KR 20120026474
(71) Applicant: Samsung Electronics Co., Ltd, Gyeonggi-do 443-742 (KR)
(72) Inventor: Chang, Won-Suk, 443-742 Gyeonggi-do (KR); Kwon, Mu-Sik, 443-742 Gyeonggi-do (KR); Kim, Do-Hyeon, 443-742 Gyeonggi-do (KR); Kim, Jung-Rim, 443-742 Gyeonggi-do (KR); Ahn, Hee-Bum, 443-742 Gyeonggi-do (KR); Lee, Dong-Chang, 443-742 Gyeonggi-do (KR); Lee, Dong-Hyuk, 443-742 Gyeonggi-do (KR); Hwang, Seong-Taek, 443-742 Gyeonggi-do (KR)
(74) Representative: Grünecker, Kinkeldey, Stockmair & Schwanhäusser

(57) **Abstract**

A graphic processing apparatus for updating a graphic screen and a method thereof are provided. The apparatus includes an object information calculator for calculating object information of an object input into the graphic screen; an object area calculator for calculating object area information of the input object; and a controller for storing object management information matched with the calculated object information and the calculated object area information, updating object management information of an object edited by an object editing, and then updating the graphic screen by using the updated object management information.

## Description

### BACKGROUND OF THE INVENTION

### 1. Field of the Invention

The present invention relates generally to a graphic processing apparatus and a method thereof, and more particularly, to a graphic processing apparatus and method for updating a graphic editing screen according to an editing request of a user.

### 2. Description of the Related Art

A graphic processing apparatus typically receives objects through a graphic input screen, stores the received graphic objects according to an input order, and then generates an output image including the stored graphic objects.

A request for editing the output image is input, the graphic processing apparatus edits the objects on the graphic editing screen according to the editing request to update the graphic editing screen and outputs the output image. At this time, the graphic processing apparatus uses two methods to update the graphic editing screen. In the first method, the entire graphic editing screen is deleted and then the objects are input again. In the second method, respective input screens are backed up to a separate storage space according to an order of objects input into the graphic input screen and then the backed up input screen corresponding to the object editing is displayed.

For example, in the first method, when there is a request for deleting a text in a state where a figure, an image, and the text have been sequentially input, the entire graphic editing screen is deleted, the figure and image are input again, and the output image is displayed.

In the second method, when a figure, an image, and a text are sequentially input, a screen where the figure is input, a screen where the figure and the image are input, and a screen where the figure, the image, and the text are input are separately stored. When there is a request for deleting the text, the screen where the figure and the image are input is read and then displayed on an output area.

As described above, when there is a request to edit the graphic screen, the entire graphic screen is deleted according to the request and then the graphic screen to which the editing is applied is displayed again. Alternatively, respective input screens are all stored according to input objects, an input screen corresponding to the editing is read when the editing is requested, and the read input screen is displayed.

However, the first method has a disadvantage in that a screen update speed is very slow, since the screen updated by the editing is output again after deleting the entire screen whenever there is the request for editing the graphic screen. In this case, as the number of objects input into the graphic screen increases, the screen update speed decreases.

Also, the second method has a disadvantage in that many separate storage spaces are needed when there is a large number of graphic screens, since respective graphic screens must be stored whenever the object is input. In this case, there are restrictions in the storage space, which limit the number of times that an undo or a redo operation can be continuously processed.

### SUMMARY OF THE INVENTION

Accordingly, the present invention is provided to address the above-described problems and provide at least the advantages described below. An aspect of the present invention provides a graphic processing apparatus for storing management information of an object input into a graphic screen and updating the graphic screen according to an editing request by using the management information.

In accordance with an aspect of the present invention, a graphic processing apparatus for updating a graphic screen is provided. The graphic processing apparatus includes an object information calculator for calculating object information of an object input into the graphic screen; an object area calculator for calculating object area information of the input object; and a controller for storing object management information matched with the calculated object information and the calculated object area information, updating object management information of an object edited by an object editing, and then updating the graphic screen by using the updated object management information.

In accordance with another aspect of the present invention, a method of updating a graphic screen in a graphic processing apparatus is provided. The method includes calculating object information of an object input into the graphic screen; calculating object area information of the input object; storing object management information matched with the calculated object information and the calculated object area information; updating the object management information of an object edited by an object editing; and updating the graphic screen by using the updated object management information.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a diagram illustrating a graphic processing apparatus according to an embodiment of the present invention;
FIG. 2 is a signal flowchart illustrating a process of storing management information of an object input into a graphic processing apparatus according to the an embodiment of the present invention;
FIGs. 3 and 4 are diagrams illustrating examples of a process of extracting area information and object information of an input object into a graphic processing apparatus and storing the extracted information according to an embodiment of the present invention;
FIG. 5 is a flowchart illustrating a process of displaying an object input screen updated according to an object editing in a graphic processing apparatus according to an embodiment of the present invention;
FIGs. 6 to 9 are diagrams illustrating examples of a process of displaying an object input screen updated by an editing according to an embodiment of the present invention;
FIG. 10 is a diagram illustrating an example of a process of calculating area information of an area where an object is located according to another embodiment of the present invention; and
FIGs. 11A to 11C are diagrams illustrating examples for describing a process of updating an object editing screen according to an embodiment of the present invention.

### DETAILED DESCRIPTION OF EMBODIMENTS OF THE PRESENT INVENTION

Hereinafter, various embodiments of the present invention will be described with reference to the accompanying drawings. In the following description of the present invention, a detailed description of known functions and configurations incorporated herein will be omitted when it may obscure the subject matter of the present invention.

According to an embodiment of the present invention, an editing screen can be quickly updated while using a small data storage space by calculating object information of an object input into a graphic screen, calculating object area information of the input object, storing object management information matched with the calculated object information and the calculated object area information, updating object management information of an object edited by an object editing, and updating the graphic screen by using the updated object management information.

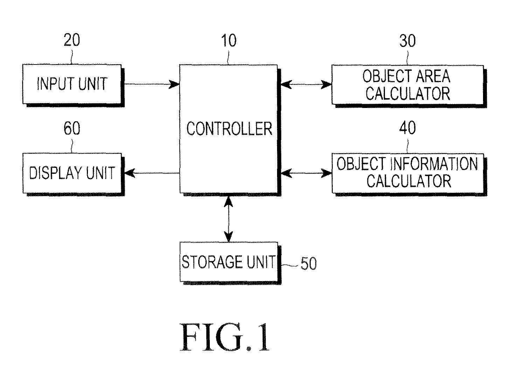

FIG. 1 is a diagram illustrating a graphic processing apparatus according to an embodiment of the present invention.

The graphic processing apparatus according to an embodiment of the present invention includes a controller 10, an input unit 20, an object area calculator 30, an object information calculator 40, a storage unit 50, and a display unit 60. Here, the input unit 20 and the display unit 60 may be configured as separate components, or as a combined component, such as a touch screen including a touch detector and a display unit may be used.

The controller 10 controls general operations of the graphic processing apparatus. For example, when an object is input on a graphic editing screen for graphic processing, the controller 10 calculates object area information of an area on the graphic editing screen where the input object is located through the object area calculator 30. Here, the object area information contains coordinate information or an index of the area occupied by the object on the graphic editing screen. Further, the graphic editing screen refers to a graphic screen where editing actions, such as moving a position of the object, deleting the object, performing an undo or a redo operation, etc., can be performed. Here, the object includes hand-writing, and a character, number, or image input by a keypad, and the hand-wring or the character include all languages such as Korean, English, Chinese, etc.

A method of calculating the object area information according to an embodiment of the present invention described in detail as follows. The controller 10 divides the graphic editing screen into division areas having a preset size through the object area calculator 30, and matches division area information such as an index or ID with each division area to distinguish between the division areas. The division area may be an area having a square shape in a preset size, and the preset size may have a value greater than a writing stroke width that can be input into the graphic editing area.

When the object is input, the controller 10 identifies the division area where the input object is located, and calculates division area information of the identified division area, for example, object area information containing an index number through the object area calculator 30.

The controller 10 calculates object information of the input object through the object information calculator 40. At this time, the object information contains object IDentification (ID) information.

Thereafter, the controller 10 stores object management information matched with the object area information calculated through the object area calculator 30 and the object information calculated through the object information calculator 40 in the storage unit 50.

When the object editing on the graphic editing screen is performed, the controller 10 updates the object management information of the edited object and updates the graphic editing screen, by using the updated object management information to display the updated graphic editing screen through the display unit 60. Herein, object editing refers to performing editing actions such as moving a position of the object, deleting the object, performing an undo or a redo operation, etc.

More specifically, when there is a request to edit the object, the controller 10 modifies the object information stored in accordance with the object area information based on the request, and then stores the modified information in the storage unit 50. For example, when object area information (i.e., object IDs stored in accordance with index area #1) have IDs of "10" and "11", when there is a request for deleting the object having the object ID "10", the controller 10 deletes the object ID 10 from the object IDs stored in accordance with index area #1 and then stores updated object management information in which only the object ID 11 is matched with index area #1 in the storage unit 50.

Thereafter, the controller 10 updates the graphic editing screen by using the updated object management information and then displays the updated graphic editing screen through the display unit 60. For example, the display unit 60 displays the graphic editing screen where the object having the object ID "10" is deleted.

The input unit 20 includes a key button for a plurality of key inputs, and transmits a key signal corresponding to each key input generated by pressing the key button to the controller 10. The input unit 50 may be implemented by a touch screen or a touch pad for detecting a touch input to output a key signal.

The object area calculator 30 calculates object area information of the input object according to a control of the controller 10.

Specifically, the object area calculator 30 divides the graphic editing screen into division areas each having a preset size, and matches division area information, such as an index or an ID, with each division area, in order to distinguish between the division areas. Thereafter, the object area calculator 30 identifies the division area where the input object is located, and calculates division area information of the identified division area (e.g., object area information containing an index number) through the object area calculator 30.

The object information calculator 40 calculates object information of the input object according to a control of the controller 10.

The storage unit 50 stores general data used in the graphic processing apparatus. More specifically, the storage unit 50 stores one or more objects and matches the object area information calculated from the object area calculator 30 with the object information calculated from the object information calculator 40 to store the matched information. The object information and the object area information of the object stored in the storage unit 50 corresponds to information that occupies very small capacities and may have a very small additional storage space.

The display unit 60 displays the graphic editing screen and displays the updated graphic editing screen according to the editing request.

As described above, according to an embodiment of the present invention, when the graphic editing is performed, the graphic editing screen is quickly updated, and then the updated graphic editing screen is displayed.

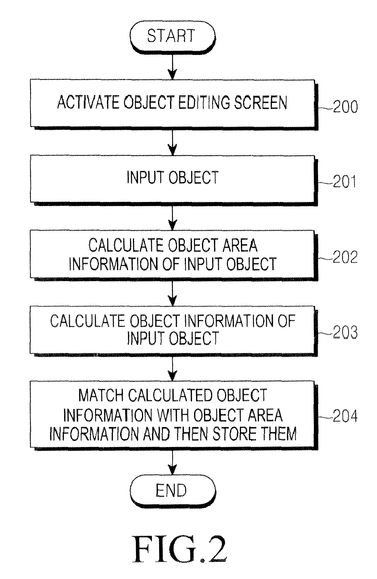

FIG. 2 is a signal flowchart illustrating a process of storing management information of an object input into the graphic processing apparatus according to an embodiment of the present invention.

Referring to FIG. 2, in step 200, when there is a request to edit an object, the controller 10 activates the object editing screen. More specifically, when there is the request for editing the object, the controller 10 displays the object editing screen through the display unit 60.

When the object is input in step 201, the controller 10 calculates object area information of the input object through the object area calculator, in step 202. Here, the object may include any of a figure, a text, an image, a writing stroke, etc., and the graphic editing screen is configured to input or edit the object.

In step 203, the controller 10 calculates object information of the input object, through the object information calculator 40.

In step 204, the controller 10 stores object management information matched with the calculated object area information and the calculated object information in the storage unit 50.

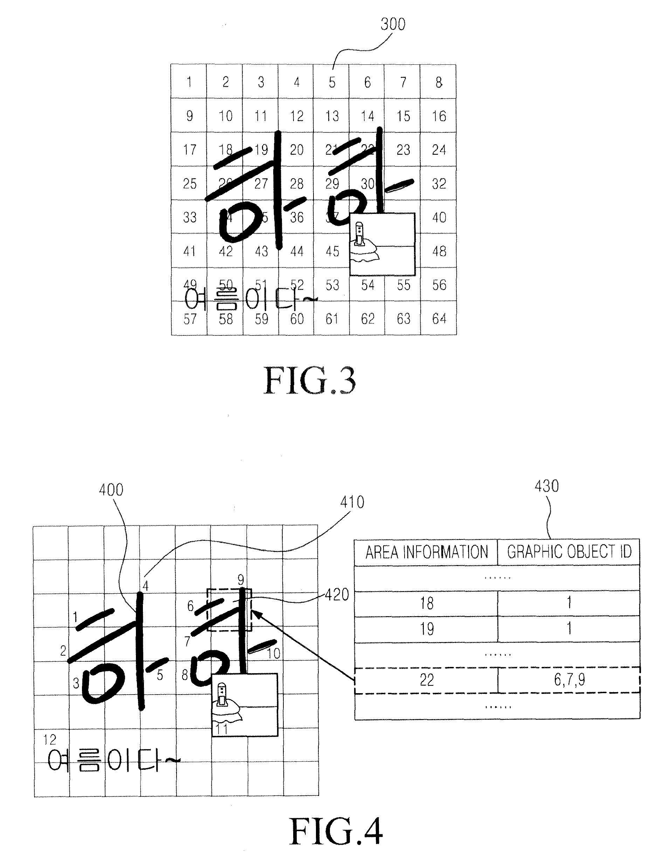

FIGs. 3 and 4 are diagrams illustrating examples of a process of extracting area information and object information of an object input into the graphic processing apparatus and storing the extracted information according to an embodiment of the present invention.

The embodiment of the present invention provides an example where the object corresponds to a Korean character.

FIG. 3 is a diagram illustrating an example of a process of dividing a screen of the graphic editing apparatus into division areas having a preset size according to an embodiment of the present invention.

For example, the controller 10 divides the graphic editing screen where hand-writing data, image data, and text data input by a keypad are input, as illustrated in FIG. 3, into 64 division areas having a preset size. The division area may be have a square shape in a preset size, and the preset size may be greater than a writing stroke width set to the graphic editing screen. Further, each division area has an index number 300 for distinguishing between division areas. In other words, a particular division area may have an index value 300 of "5" as object area information.

FIG. 4 is a diagram illustrating an example of a process of matching object information and object area information of the object according to an embodiment of the present invention.

In the embodiment of the present invention according to FIG. 4, it is assumed that the graphic editing screen is divided into 64 division areas and respective division areas have index numbers of 1 to 64, as illustrated in FIG. 3.

As illustrated in FIG. 4, each object has identification information such as an object ID, and for example, hand-writing data has object IDs corresponding to respective writing strokes. When the hand-writing data includes ten writing strokes, object IDs are allocated to ten writing strokes, and thus the writing data has ten object IDs. For example, a writing stroke 400 has an object ID 410 of "4"._

When a division area 420 has an index number of 22, the controller 10 matches the object area information index value of 22 with object IDs of "6", "7", and "9" belonging to objects located in the corresponding division area, and then stores them.

As described above, according to an embodiment of the present invention, when the graphic editing is performed, the graphic editing screen is quickly updated using a small storage space and then the updated graphic editing screen can be displayed by storing information having a small size such as object information and area information of the object without separately storing the graphic editing screen according to an input object.

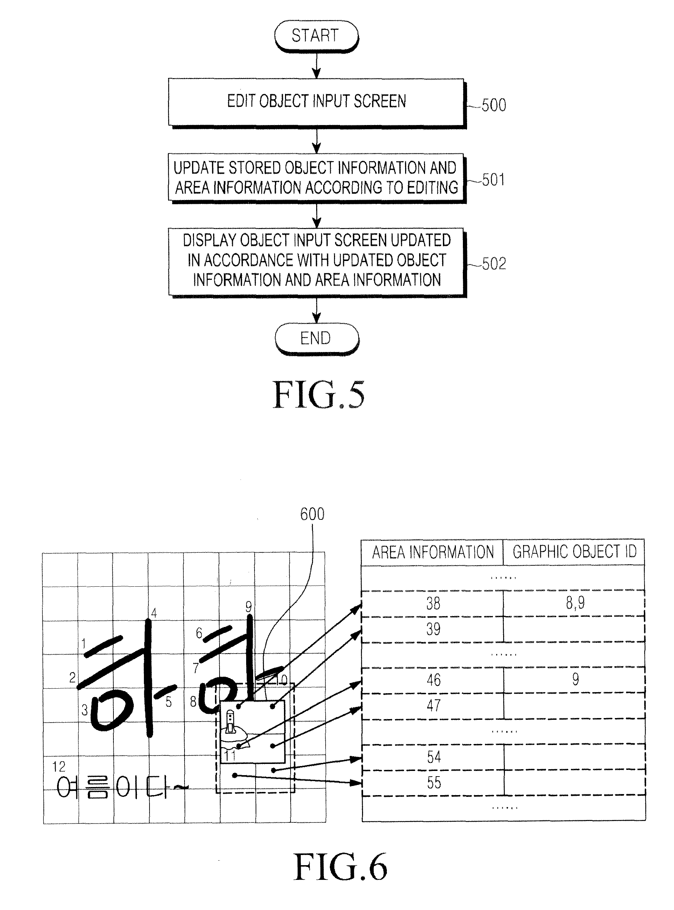

FIG. 5 is a flowchart illustrating a process of displaying an object input screen updated according to an object editing in a graphic processing apparatus according to an embodiment of the present invention.

Referring to FIG. 5, when a request to edit an object is input on the graphic screen in step 500, the controller 10 updates object management information of the object according to the editing request in step 501. In other words, the controller 10 updates the stored object information and objet area information of the object for which the editing is requested.

In step 502, the controller 10 displays the graphic screen updated in accordance with the updated object information and object area information through the display unit 60.

Specifically, the controller 10 updates one or more pieces of information stored in accordance with the object area information of the object for which the editing is requested, deletes all objects within an area corresponding to the object area information of the object for which the editing is requested, and displays again the object corresponding to the updated object information through the display unit 60.

As described above, according to an embodiment the present invention, when the graphic editing is performed, the graphic editing screen is quickly updated using a small storage space and then the updated graphic editing screen can be displayed.

FIGs. 6 to 9 are diagrams illustrating examples of a process of displaying an object input screen updated by an editing according to an embodiment of the present invention.

FIG. 6 is a diagram illustrating an example of a process of updating object management information of an object for which a deletion is requested by an object deletion request according to an embodiment of the present invention.

As illustrated in FIG. 6, a request to delete an image 600 having an object ID of "11" is input, the controller 10 identifies index numbers of 38, 39, 46, 47, 54, and 55, which correspond to area information of division areas where the image 600 to be deleted is located.

The controller 10 updates object management information of the image 600 by deleting the object ID of "11" from object IDs stored in accordance with the index numbers of 38, 39, 46, 47, 54, and 55 which correspond to the area information of the image 600.

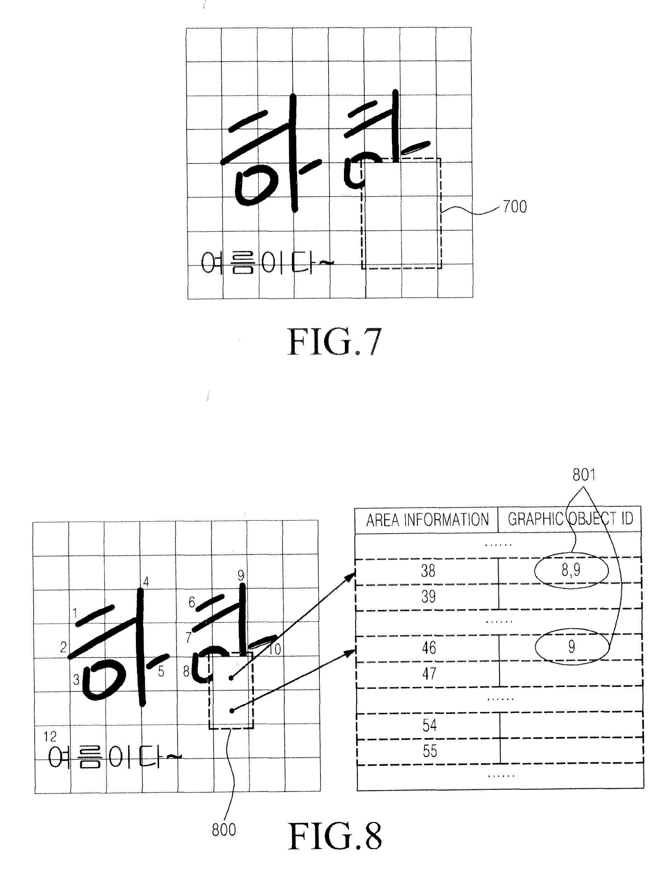

FIG. 7 is a diagram illustrating an example of a graphic screen where an object is deleted according to a deletion request according to an embodiment of the present invention.

Referring to FIG. 7, when an object ID of "11 is deleted from the object IDs corresponding to the area information of the image 600, the controller 10 deletes all objects displayed within the division areas corresponding to the index numbers of 38, 39, 46, 47, 54, and 55 as illustrated in FIG. 7.

FIG. 8 is a diagram illustrating an example of a process of updating the graphic screen in accordance with updated object management information according to an embodiment of the present invention.

Referring to FIG. 8, the controller 10 does not display any objects in the division areas corresponding to the index numbers of 39, 47, 54, and 55, where there is no graphic object ID among the division areas corresponding to the index numbers of 38, 39, 46, 47, 54, and 55. Further, the controller 10 copies objects having graphic object IDs stored in accordance with the division areas having the index numbers of 38 and 47 where the graphic object IDs are located, and pastes the copied objects into the corresponding division areas.

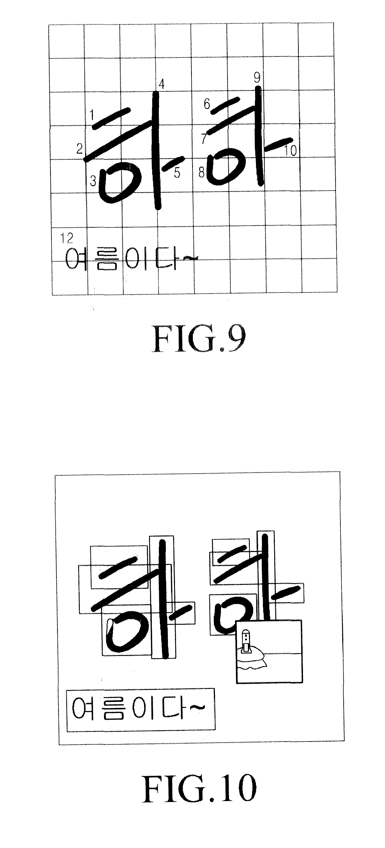

FIG. 9 is a diagram illustrating an example of an updated graphic screen according to an embodiment of the present invention.

Referring to FIG. 9, the controller 10 displays the updated graphic screen through the display unit 60. For example, when there is a request to cancel deletion of the object having the object ID of "11", the controller 10 reconstructs the object ID corresponding to the object area of the deleted object and then reconstructs the deleted object on the graphic screen. Such an operation may be an object editing operation performed according to general UNDO and REDO commands.

As described above, according to an embodiment of the present invention, object information of the object for which the deletion is requested is deleted from object information stored in accordance with object area information of the object for which the deletion is requested by an object deletion request, and all objects existing within the division area where the object for which the deletion is requested are deleted. When object information is stored in accordance with division area information of the division area, the object having the corresponding object information is copied, and the copied object is pasted into the division area. As a result, the graphic screen is updated.

Although the process of deleting the object has been described as an example, an operation for moving the object, an undo operation, or a redo operation, for example, may be performed in a similar manner, in accordance with embodiments of the present invention.

An example of an operation performed where the object moves in accordance with an embodiment of the present invention, is described as follows. In the present example, it is assumed that text data having an object ID of "12" is located in division areas having index numbers of 49, 50, 51, 52, 57, 58, 59, and 60 which correspond to division area information and then moves to division areas having index numbers of 53, 54, 55, 56, 61, 62, 63, and 64 which correspond to division area information.

When a request for moving the object is input, the controller 11 deletes object information stored in accordance with the index numbers of 49, 50, 51, 52, 57, 58, 59, and 60, which correspond to the division area information of the object for which the movement is requested (i.e., the object ID), and then additionally stores the object ID of "12" in accordance with the index numbers of 53, 54, 55, 56, 61, 62, 63, and 64.

Accordingly, the controller 11 deletes the object for which the movement is requested, which is located in the division areas having the index numbers of 49, 50, 51, 52, 57, 58, 59, and 60, and displays the object for which the movement is requested in the division areas having the index numbers of 53, 54, 55, 56, 61, 62, 63, and 64.

FIG. 10 is a diagram illustrating an example of a process of calculating area information of the area where the object is located according to another embodiment of the present invention.

According to other embodiments of the present invention described herein, a graphic screen is divided into the division areas having the preset size and identification information of the division area where the object is located is as object area information. However, embodiments of the present invention may set coordinate information of an area including each object input into the graphic screen as the object area information as illustrated in FIG. 10.

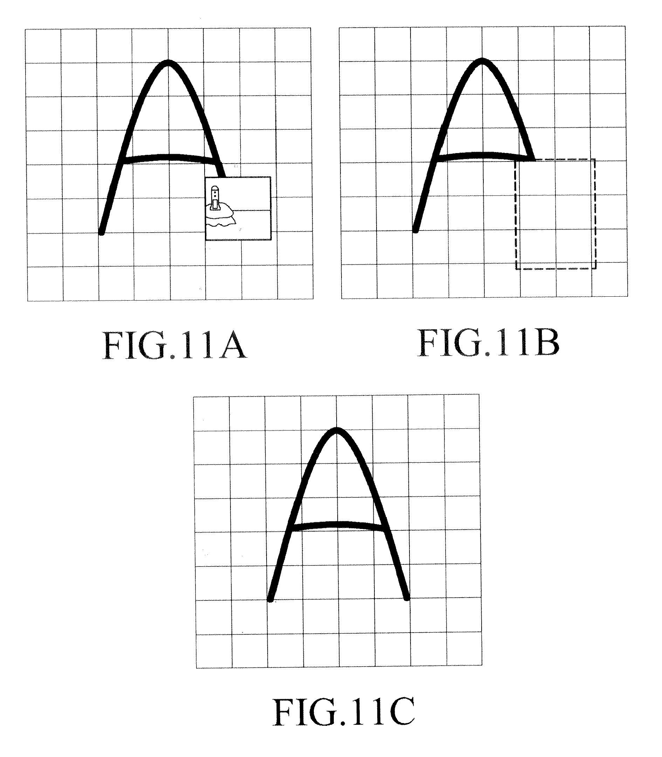

FIGs. 11A to 11C are diagrams illustrating examples for describing a process of updating an object editing screen according to an embodiment of the present invention.

The embodiment of the present invention provides an example where the object is an English character.

When an object such as an English character A and an image is input as illustrated in FIG. 11A, the controller 10 calculates object area information of the object and object information, matches the calculated object area information and object information, and then stores the matched object area information and object information.

As illustrated in FIG. 11B, when there is a request for deleting the image, the controller 10 deletes an object ID which is matched and stored with the object area information where the image of which the deletion is requested is located, and updates object management information of the corresponding image.

Thereafter, when the object ID which is matched and stored with the object area information of the deleted image exists, the controller 10 copies an object having the existing object ID and pastes the copied object to an object area of the deleted image, so as to output a result as illustrated in FIG. 11C.

Although the present invention has described the process of updating the editing screen according to a graphic editing by using a Korean character and an English character, the present invention is not limited thereto and all characters including Korean and English characters, numbers, special characters, hand-writing, paintings and pictures can be used.

Embodiments of the present invention provide an advantage of quickly updating the graphic editing screen by using a small storage space and then displaying the updated graphic editing screen when the graphic editing is performed.

Also, according to embodiments of the present invention, there is no limitation in the number of times that continuous undo and redo operations according to the graphic editing can be processed.

Embodiments of the present invention can be implemented in software, hardware, or a combination thereof. Any such software may be stored, for example, in a volatile or non-volatile storage device such as a Read-Only Memory (ROM), a memory such as a Random Access Memory (RAM), a memory chip, a memory device, or a memory Integrated Circuit (IC), or a recordable optical or magnetic medium such as a Compact Disc (CD), a Digital Versatile Disc (DVD), a magnetic disk, or a magnetic tape, regardless of its ability to be erased or its ability to be re-recorded. Memory included in the mobile terminal is one example of machine-readable devices suitable for storing a program including instructions that are executed by a processor device to thereby implement embodiments of the present invention. Therefore, embodiments of the present invention provide a program including codes for implementing a system or method claimed in any claim of the accompanying claims and a machine-readable device for storing such a program. Further, such programs may be electronically conveyed through any medium such as a communication signal transferred via a wired or wireless connection, and embodiments of the present invention appropriately include equivalents thereto.

Further, a graphic processing apparatus according to embodiments of the present invention can receive such a program from a program-providing apparatus connected to the graphic processing apparatus wirelessly or through a wire and store the received program. The program providing-apparatus may include a memory for storing a program containing instructions for allowing the graphic processing apparatus to perform a preset content protecting method and information required for the content protecting method, a communication unit for performing wired or wireless communication with the graphic processing apparatus, and a controller for transmitting the corresponding program to the graphic processing apparatus apparatus according to a request of the graphic processing apparatus or automatically.

While the present invention has been shown and described with reference to certain embodiments thereof, it will be understood by those skilled in the art that various changes in form and details may be made therein without departing from the spirit and scope of the present invention as defined by the appended claims and their equivalents

## Claims

1. A graphic processing apparatus for updating a graphic screen, comprising:
an object information calculator for calculating object information of an object input into the graphic screen;
an object area calculator for calculating object area information of the input object; and
a controller for storing object management information matched with the calculated object information and the calculated object area information, updating object management information of an object edited by an object editing, and then updating the graphic screen by using the updated object management information.

2. The graphic processing apparatus of claim 1, wherein the object information corresponds to an object IDentification (ID) of the input object.

3. The graphic processing apparatus of claim 1, wherein the object area calculator divides the graphic screen into division areas having a preset size, matches division area information with each of the divided division areas to distinguish between the division areas, and calculates the division area information of the division area where the input object is located as the object area information.

4. The graphic processing apparatus of claim 3, wherein the division area information contains at least one of coordinate information of the division area and an index number of the division area.

5. The graphic processing apparatus of claim 4, wherein the object area calculator allocates the index number to each of the divided division areas to distinguish between the division areas.

6. The graphic processing apparatus of claim 5, wherein, when the controller updates the object management information, the controller stores object area information updated in accordance with the object area information of the edited object.

7. The graphic processing apparatus of claim 6, wherein the controller deletes an object located within a division area corresponding to the object area information of the edited object, and then updates the division area corresponding to the object area information of the edited object based on the updated object area information.

8. A method of updating a graphic screen in a graphic processing apparatus, the method comprising:
calculating object information of an object input into the graphic screen;
calculating object area information of the input object;
storing object management information matched with the calculated object information and the calculated object area information;
updating the object management information of an object edited by an object editing; and
updating the graphic screen by using the updated object management information.

9. The method of claim 8, wherein the object information corresponds to an object IDentification (ID) of the input object.

10. The method of claim 8, wherein calculating the object area information comprises:
dividing the graphic screen into division areas having a preset size;
matching division area information with each of the divided division areas to distinguish between the division areas; and
calculating the division area information of the division area where the input object is located as the object area information.

11. The method of claim 10, wherein the division area information contains at least one of coordinate information of the division area and an index number of the division area.

12. The method of claim 11, wherein matching the division area information to distinguish between the division areas corresponds to allocating the index number to each of the divided division areas to distinguish the division areas.

13. The method of claim 12, wherein updating the object management information corresponds to storing object area information updated in accordance with the object area information of the edited object.

14. The method of claim 13, wherein updating the graphic screen comprises:
deleting an object located within a division area corresponding to the object area information of the edited object; and
updating the division area corresponding to the object area information of the edited object based on the updated object area information.
